# EUROPEAN PATENT SPECIFICATION

(11) **EP 2 708 320 B1**
(45) Date of publication and mention of the grant of the patent: **11.01.2017**
(21) Application number: 13184784.0
(22) Date of filing: 17.09.2013
(51) Int. Cl.: B23Q 11/08

(54) **Bellows covering device for machine tools**
Faltenbalgabdeckungsvorrichtung für Werkzeugmaschinen
Dispositif de recouvrement de soufflet pour machines-outils

(30) Priority: 18.09.2012 IT BO20120491
(43) Date of publication of application: 19.03.2014
(73) Proprietor: P.E.I. Protezioni Elaborazioni Industriali S.r.l., 40012 Calderara di Reno (Bologna) (IT)
(72) Inventor: Tabellini, Giorgio, 40037 Sasso Marconi (Bologna) (IT); Maccaferri, Fabio, 40010 Sala Bolognese (Bologna) (IT)
(74) Representative: Milli, Simone

(56) References cited:
- DE-A1- 3 635 874
- DE-U1- 9 202 522
- US-A- 4 638 722

## Description

This invention relates to a bellows covering device for machine tools. Prior art covering devices comprise a bellows consisting of a frame made up of a plurality of slats which allow the bellows to remain stable in the open condition.

One very important function which these covering devices must perform is to provide effective protection against chippings and swarf resulting from processing, and thus to act as a protective screen for the operator working at the machine tool.

These covering devices must also protect the machine against infiltrations of dust, liquid or other extraneous material.

For this reason, the bellows can be extended in a plane of opening so as to create a protective screen against swarf and extraneous agents.

These prior art covering devices may also be equipped with more than one bellows so as to be able to protect more than one side of the machine they are mounted on.

It is therefore very important for the covering devices to be free of gaps and openings which might allow the swarf and chippings to escape from the machine and the extraneous agents to find their way into the machine.

The prior art covering devices are not, however, free of openings and gaps.

In particular, the covering devices with more than one bellows to cover more than one side of the machine have openings especially at a corner zone where the planes of opening of the bellows intersect. Indeed, in a first known form, these devices have a plurality of bellows, separate from each other, for each side of the machine to be protected. For that reason, gaps are formed at the corner zone, especially when the device and the bellows are opened, making the cover not only unsuitable for operator safety but also unable to adequately protect the machine from extraneous agents.

Also known are covering devices which can overcome this disadvantage and which have a single bellows capable of protecting the machine on more than side.

To obtain protection on more than one side, the bellows is suitably bent to allow it to continue opening in a different plane corresponding to another side of the machine to be protected.

Thus, at the corner zone, there are no openings or gaps in the cover because the material the bellows is made of is uninterrupted.

This form of covering, too, is not free of defects, however.

In effect, to continue opening in a different plane, as mentioned above, the bellows must be suitably bent at the corner zone where the change of plane occurs.

Bending the bellows is first of all possible by machining the slats of the bellows mounting frame to form suitable slots on the frame slats which can accommodate the excess material resulting from bending. This excess material is also disadvantageous because it makes the bellows and the device thicker, thus increasing its overall dimensions when closed.

Moreover, pockets are created at the bend in the bellows where process waste or dust can collect, also making the device difficult to clean.

Document US4638722 describes a covering device **having only a single bellows, which protect a working area only at one side.**

**The single bellows can be** equipped with an inner cover element and an outer cover element, both co-planar with the bellows and connected to each other by support members.

It should be noted, however that this device cannot be used to protect/cover walls which are positioned at an angle to each other, that is to say, it cannot be used to protect more than one side of the machine.

**Document** DE 36 35 874 **discloses a protecting device having more than one bellows, which are attached one to the other by means of an hinged connections.**

**The plurality of bellows move substantially on the same plane and, therefore, they protect the machine only from one side.** The purpose of this invention is to provide a bellows covering device for machine tools which overcomes the above mentioned disadvantages of the prior art.

The main aim of the invention is to provide a bellows covering device for machine tools which can protect more than one side the machine it is mounted on and which does not have gaps or openings, especially at the corner zone where the planes of opening of the bellows intersect, corresponding to the sides of the machine to be protected.

Another aim of the invention is to provide a bellows covering device which has a simple structure and which can be made quickly.

A further aim of the invention is to provide a bellows covering device which is easy to clean to quickly remove any process waste and extraneous agents that have settled on it.

The technical purpose and aims specified are substantially achieved by a bellows covering device comprising the technical features set out in the independent claim.

More specifically, these aims are achieved by a bellows covering device for machine tools, as defined in claim 1.

These and other innovative features of the invention, as well as its advantages, will become more apparent from the following detailed description of a preferred embodiment of it, illustrated purely by way of non-limiting example in the accompanying drawings, in which:
- Figure 1 is a perspective view of the device according to the invention;
- Figure 2 shows an enlarged view of a first detail from Figure 1;
- Figure 3 shows an enlarged view of a second detail from Figure 1;
- Figure 4 shows a side view, with some parts cut away in order to better illustrate others, of a first embodiment of the detail of Figure 2;
- Figure 5 shows a side view, with some parts cut away in order to better illustrate others, of a second embodiment of the detail of Figure 2;
- Figure 6 shows a side view, with some parts cut away in order to better illustrate others, of a third embodiment of the detail of Figure 2;
- Figure 7 shows a side view, with some parts cut away in order to better illustrate others, of a fourth embodiment of the detail of Figure 2;
- Figure 8 shows a side view, with some parts cut away in order to better illustrate others, of a fifth embodiment of the detail of Figure 2;
- Figure 9 is a sectional view of the detail of Figure 2 through the plane IX-IX of Figure 4.

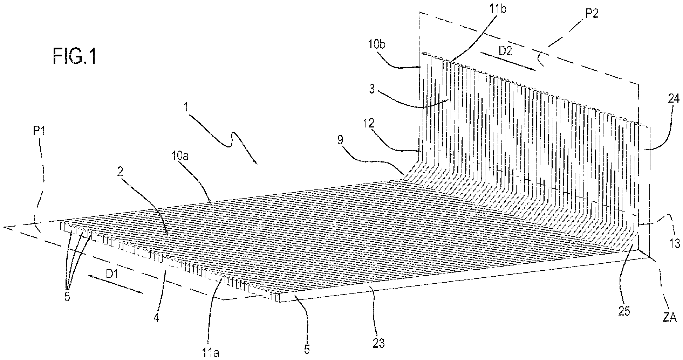

As illustrated in Figure 1, the numeral 1 denotes in its entirety a bellows covering device for machine tools according to this invention. The device 1 comprises a plurality of accordion-like bellows which allow covering more than one side of the machine.

It should be noted, therefore, that the device 1 preferably comprises a plurality of bellows (at least a first and a second bellows) to define a covering for protecting more than one side of the machine.

In Figure 1 the covering device 1 has two bellows, the first bellows being labelled 2 and the second bellows being labelled 3.

Each of the bellows 2 and 3, made preferably of a plasticized fabric, is movable from a closed configuration to an open configuration and vice versa.

It should also be noted that the first bellows 2 and the second bellows 3 have an accordion-like form and are movable between a closed configuration and an open configuration in a first plane P1 (for the first bellows) and a second plane P2 (for the second bellows), respectively.

The closed and open configurations, attributed here to the bellows 2 and 3, coincide with the closed and open configurations of the device 1.

At the open configuration, illustrated in Figure 1, the bellows 2 and 3 act as a screen protecting both the operator of the machine against swarf produced during machining processes and the machine itself against extraneous agents such as, for example, dust or liquids.

The bellows 2 and 3 are opened and closed in respective planes P1 and P2 and along respective directions, indicated in Figure 1 by the arrows D1 and D2.

More specifically, the first bellows 2 is movable in a first plane P1 and the second bellows 3 is movable in a second plane P2. The planes P1 and P2 meet at a corner zone, labelled ZA.

Further, in the detail of the embodiment illustrated, the planes P1 and P2 are perpendicular to each other.

The device 1 further comprises a frame 4 for supporting the bellows 2 and 3 during opening and closing.

The frame 4 comprises a plurality of slats 5 which are connected to each of the bellows 2 and 3 and are able to impart greater rigidity thereto when the bellows are opened.

The slats 5 are substantially L-shaped plates whose shape enables them to stiffen both of the bellows 2 and 3 simultaneously.

More in detail, each bellows 2 and 3, owing to its accordion-like form, has longitudinal first pleats 6a and 6b and second pleats 7a and 7b alternated with each other. Further, the pleats define longitudinal strips 8a and 8b for each of the bellows 2 and 3.

As shown in the representation of the device 1 of Figure 1, each slat 5 of the frame 4 is connected integrally to the bellows 2 and 3 at the respective first pleats 6a and 6b of the respective bellows.

At the corner zone ZA, the device 1 comprises at least one joining member 9 for connecting the bellows 2 and 3.

It should be noted that the joining member 9 is operatively coupled to the first and second bellows (2,3) in such a way as to connect them at the corner zone ZA.

In the preferred embodiment, the device 1 has only one joining member 9 to connect the first bellows 2 and the second bellows 3.

More specifically, each of the bellows 2 and 3 has a respective inside surface 10a and 10b, facing the machine, and a respective outside surface 11 a and 11 b, opposite to the inside surface 10a and 10b, and the joining member 9 is such that it uniformly and uninterruptedly connects the inside surfaces 10a and 10b and outside surfaces 11 a and 11 b of the first bellows 2 and of the second bellows 3.

The joining member 9 has a respective inside surface 12 and a respective outside surface 13 which are connected, respectively, to the inside surface 10a and 10b and to the outside surface 11 a and 11 b of the first and second bellows 2 and 3 in such a way as to obtain the above mentioned uninterrupted and uniform connection of the surfaces of the bellows 2 and 3.

As will be clarified below by a more detailed description of the structure of the joining member 9, the term "uniform" is used to mean that the connection of the surfaces of the first and second bellows 2 and 3 is obtained without bending either of the bellows and, hence, that the connection is uninterrupted.

Advantageously, an uninterrupted connection of the surfaces of the first bellows 2 and of the second bellows 3 makes the protection provided by the device 1 more effective because it totally avoids the presence of openings or gaps at the corner zone ZA when the device 1 is brought to the open configuration. As mentioned above, such gaps and openings might allow swarf to escape from the machine or extraneous agents to find their way into the machine.

A uniform connection, on the other hand, advantageously avoids pockets from being formed on the bellows 2 and 3 in which dust, liquids or process waste would settle. The device 1 is therefore cleaner and is quicker and easier to clean than the prior art covering devices described above.

Looking in more detail, the joining member 9 comprises a plurality of bands 14 which are connected to each other. More specifically, the joining member 9 is obtained from bands 14 which are initially separate and subsequently connected to each other.

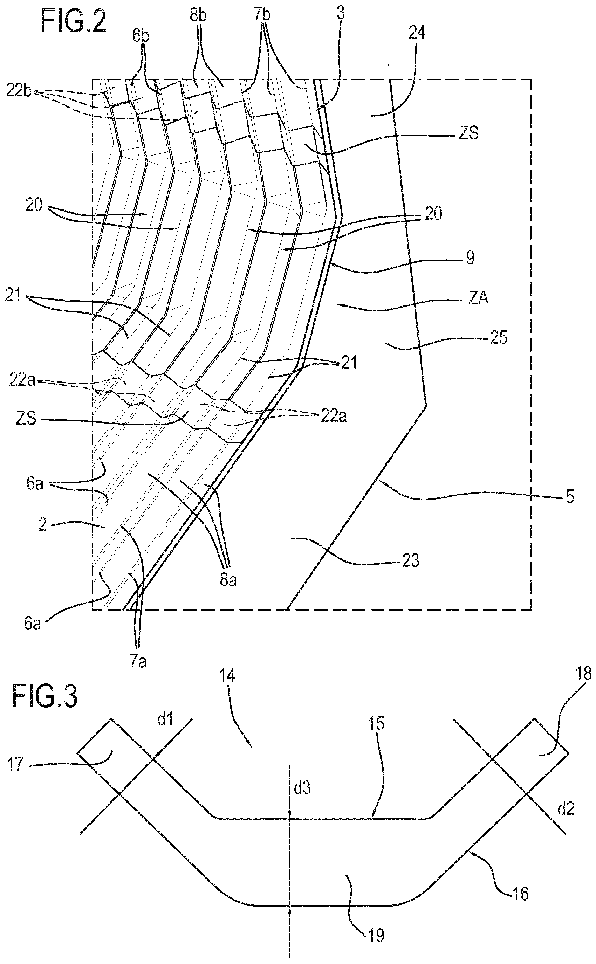

The bands 14 are identical and have an inner profile 15 and an outer profile 16 (Figure 3).

Further, each band 14 comprises a first portion 17, a second portion 18 and a third portion 19 connecting the first portion 17 to the second portion 18.

The bands 14 are joined to each other along the outer profile 16 of each band 14. The bands 14 may be joined to each other by, for example, stitching, gluing or sealing.

Thus, each pair of connected bands 14 forms a base element 20.

All the base elements 20 together constitute the joining member 9 in its entirety.

When the outer profiles 16 of the bands 14 are joined, a corner, labelled 21 in Figure 2, is formed on the base element 20.

Each base element 20, and hence each band 14 making it up, is connected (Figure 2) at the ends of it 22a and 22b, to the first bellows 2 and to the second bellows 3, respectively.

Connection is accomplished by overlapping each end 22a, 22b of the base element 20 with a respective bellows 2, 3.

The overlapped stretch, labelled ZS, is substantially 20 mm in length. The base element 20 may be coupled to each bellows 2 and 3 by, for example, gluing, stitching or sealing the parts to each other.

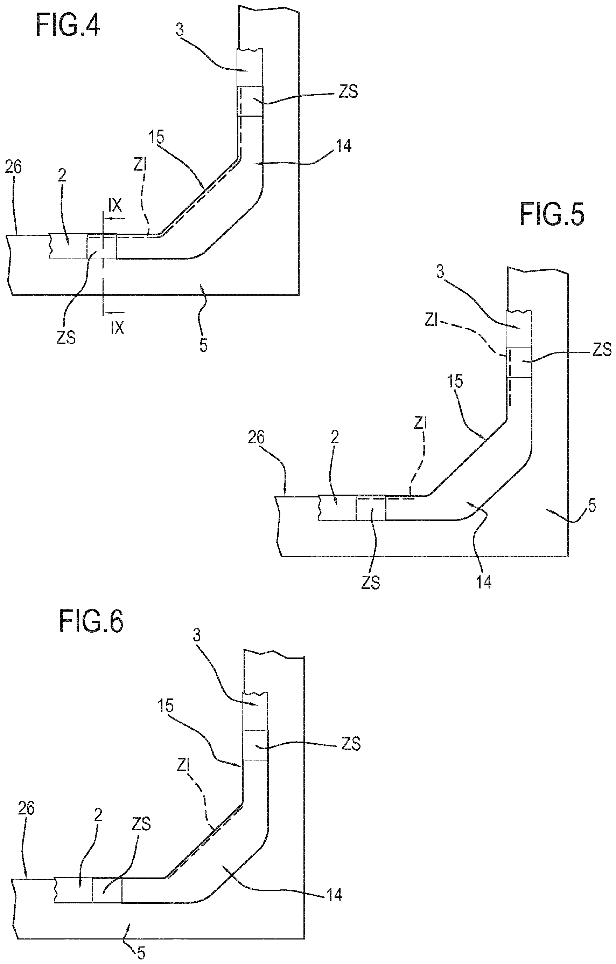

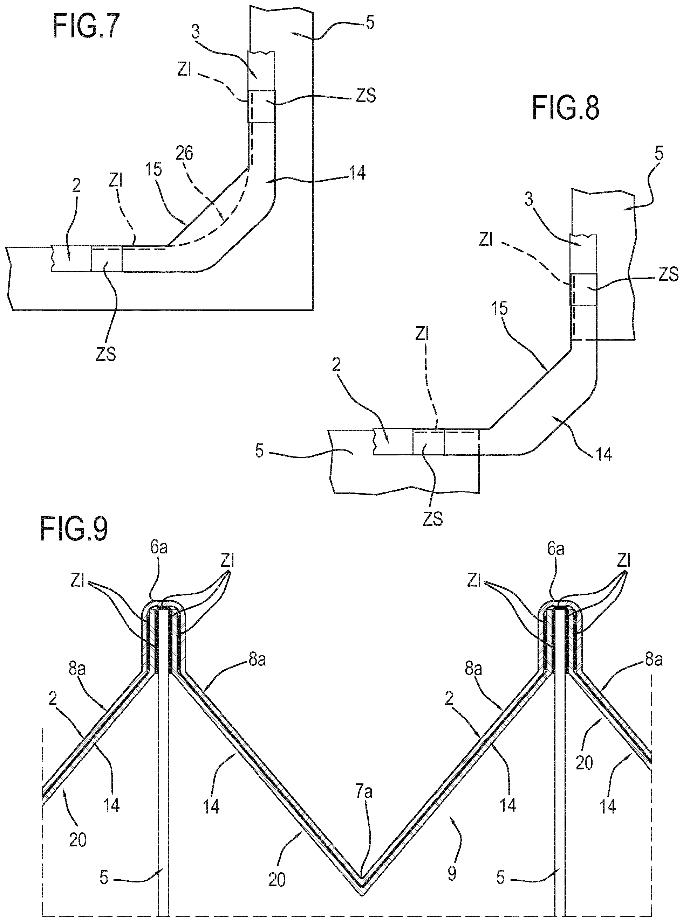

The gluing or sealing zones are clearly visible in Figure 9, which shows a sectional view through the plane IX-IX of Figure 4 at the overlapped stretch ZS of the base element 20 with the first bellows 2 and where these zones are labelled ZI.

Further, in the view of Figure 2, each end 22a and 22b of the base element 20 overlaps the bellows 2 and 3 at the top. In other words, to overlap, the base element 20 is placed in contact with the inside surface 10a of the first bellows 2 and with the inside surface 10b of the second bellows 3.

Further, the corner 21 of the base element 20 is exactly matched with the second longitudinal pleat 7a and 7b of each bellows 2 and 3, thus guaranteeing the above mentioned uninterrupted, uniform connection of the inside surface 12 and the outside surface 13 of the joining member 9 with the inside surfaces 10a and 10b and the outside surfaces 11 a and 11 b of the bellows 2 and 3.

More in detail, the first portion 17 and the second portion 18 of each band 14 are integrally connected to respective strips 8a and 8b of the first and second bellows 2 and 3. For this reason, as shown in Figure 3, the bands 14 are substantially arcuate, so that they can adapt to the different orientation of the planes P1 and P2 of opening of the bellows 2 and 3.

More specifically, the shape of the bands 14, combined with the way they are connected to each other along the outer profile 16, makes it possible to obtain a base element 20 whose shape allows connecting the bellows 2 and 3 uninterruptedly and connecting uniformly and uninterruptedly the inside surfaces 10a and 10b and the outside surfaces 11 a and 11 b of the bellows 2 and 3.

Advantageously, a joining member 9 is thus obtained which prevents build-up of dust, liquid or swarf and which makes the device 1 easy to clean.

To allow the device 1 to be opened and closed correctly, even at the corner zone ZA, the joining member 9 is also connected to the slats 5 of the frame 4.

The slats 5 comprise a first portion 23, a second portion 24 and a third portion 25 connecting the first portion 23 to the second portion 24. The slat 5 also has a respective inner profile, labelled 26.

As clearly shown in Figure 1, the first portion 23 is integrally connected to the first bellows 2, while the second portion 24 is connected to the second bellows 3.

More specifically, each base element 20 is connected at the ends of it 22a and 22b, to the first and second portions 23 and 24 of the slat 5.

Figures 4 to 8 illustrate some possible embodiments of how the joining member 9 is connected to the slats 5 of the frame 4.

Figure 4 shows the preferred embodiment of the connection, where each band 14 is connected to a respective slat 5 along its entire inner profile 15.

In this case, the inner profile 15 of each band 14 mates with the inner profile 26 of the slat 5 and the connection may be accomplished, for example, by gluing or sealing.

In Figures 4 to 8, the gluing or sealing zones are labelled ZI and represented by dashed lines.

Figure 5 shows a second embodiment, where each band 14 has an inner profile 15 which mates with the inner profile 26 of the slat 5 but the band 14 is connected to the respective slat 5 only at its first and second portions 17 and 18.

Figure 6 shows a third embodiment, where each band 14 has an inner profile 15 which mates with the inner profile 26 of the slat 5 but the band 14 is connected to the respective slat 5 only at its third portion 19.

In this case, to avoid possible gaps from being formed, each band 14 is preferably joined to the first and second bellows 2 and 3 by respective overlapped stretches ZS equal in length to the first and second portions 17 and 18 of the band 14 itself.

Alternatively, to limit the length of the overlapped stretch ZS, it might be possible to join the bands 14 forming a respective base element 20 together at the respective stretches of the first and second portions 17 and 18 which are not overlapped with the first and second bellows 2 and 3.

Figure 7 shows a fourth embodiment, where the inner profile 15 of each band 14 does not mate with the inner profile 26 of the slat 5. This case is an example where the profiles differ at the third portion 19 of the band 14 and at the third portion 25 of the slat 5.

Thus, as shown in the figure, the band 14 is connected to the respective slat 5 only at the first and second portions 17 and 18. On the other hand, the band 14 is joined to the corresponding band 14 forming therewith the base element 20 at the respective third portions 19.

Lastly, Figure 8 shows a fifth embodiment, where the frame 4 has respective separate slats 5 for supporting the first bellows 2 and the second bellows 3. In this case, too, each band 14 of the joining member 9 is connected to the respective slat 5 only at the first and second portions 17 and 18. On the other hand, the bands 14 are still more preferably joined to each other at the third portion 19 in order to prevent gaps and openings form being formed.

The applicant stresses that although they are not described for the sake of brevity, other methods of connecting the joining member 9, the base element 20 and the bands 14 with the slats 5 of the frame 4 are imaginable, without departing from the scope of the inventive concept described up to now.

Furthermore, looking in still more detail at the preferred embodiment, each base element 20 is connected to respective slats 5 of the frame 4 separately from the others. In other words, the joining member 9 is made up of a plurality of base elements 20, each of which is connected, independently of the others, to the bellows 2 and 3 and to respective slats 5.

As illustrated in Figure 9, it may be noted that two adjacent base elements 20 are connected by respective bands 14 to a single slat 5 but are not connected to each other.

More specifically, Figure 9 shows how the band 14 of a first base element 20 is connected to a first side of the slat 5, while the band 14 of an adjacent base element 20 is connected to the same slat 5 but on the opposite side thereof, without the two base elements 20 being connected to each other, however.

The reference labels ZI, again in Figure 9, denote the gluing zones where the first bellows 2 is glued to the slat 5 at the first pleat 6a of the first bellows 2.

The base elements 20 are connected to the slats 5 preferably by gluing or sealing in order to prevent gaps and cracks from forming after they are connected. In this figure, too, the gluing or sealing zone is labelled ZI.

Thus, although the base elements 20 are separate from each other, the joining member 9 can connect the inside surfaces 10a and 10b and the outside surface 11 a and 11 b of the bellows 2 and 3 uniformly and uninterruptedly.

Further, the first portion 17, the second portion 18 and the third portion 19 have respective widths, labelled d1, d2 and d3 in Figure 3. More in detail, the widths d1, d2 and d3 differ from each other.

The use of portions which differ in width is particularly advantageous when the device 1 is opened.

In effect, local stresses are created at the corner zone ZA and thus at the joining member 9.

These stresses can lead to breaking and tearing of the material the joining member 9 is made of.

To prevent this from happening, each band 14 has a third portion 19 whose width d3 is greater than that of the others.

For easier assembly, it is preferable for the first portion 17 and the second portion 18 to be substantially equal in width, respectively, to the strips 8a and 8b of the first and second bellows 2 and 3 they are connected to.

The third portion 19, on the other hand, preferably has a width d3 which is greater than the others because that means the stresses generated at the corner zone when the device 1 is opened can be discharged onto it, thereby preventing the joining member 9 from tearing on account of these stresses.

In other terms, at the third portion 19, the band 14 is characterized by excess material which can compensate for the above mentioned stresses.

The device 1 as described brings numerous advantages.

First of all, the device 1 is simple in construction and structure, since the joining member 9 is easy to make and just as easy to join to the bellows 2 and 3.

The simple construction translates as lower costs of production or of modifying existing devices.

The device 1 also offers a high level of protection compared to the prior art devices since the geometry and shape of the joining member 9 as described make it possible to eliminate any gaps or openings at the corner zone ZA.

Also, owing to the uninterrupted and uniform connection of the inside surfaces 10a and 10b and outside surfaces 11 a and 11 b of the bellows 2 and 3, the device 1 is easy to clean and keep clean because there are no pockets on the bellows 2 and 3 where dust, swarf and other dirt can collect and build up.

Moreover, compared to the prior art devices described above, since there is no bent material at the corner zone ZA, the device 1 also occupies less space when it is in the closed configuration.

Also defined by the invention is a method of covering machines, preferably machine tools, comprising the following steps:
- preparing at least a first accordion-like bellows 2 and a second accordion-like bellows 3, both movable between a closed configuration and an open configuration, respectively, in a first plane P1 and in a second plane P2, and vice versa, and each having a respective inside surface (10a, 10b) and a respective outside surface (11 a, 11 b);
- preparing a frame 4 comprising a plurality of slats 5, integrally connected to each bellows (2,3) to support and stiffen each bellows (2,3) during opening and closing;
- preparing at least one member 9 for joining the first bellows 2 and the second bellows 3 and which uninterruptedly and uniformly connects the inside surfaces (10a, 10b) and the outside surface (11 a, 11 b) of the first bellows 2 and second bellows 3 at a corner zone ZA where the first plane P1 and the second plane P2 meet.

The invention described above is susceptible of industrial application and it may be modified and adapted in several ways without thereby departing from the scope of the inventive concept, as defined by the claims. Moreover, all the details of the invention may be substituted for technically equivalent elements.

## Claims

1. A bellows covering device for machine tools, comprising:
- a pair of a first and a second accordion-like bellows (2, 3) movable between a closed configuration and an open configuration and vice versa, and each of said first and second accordion-like bellows (2, 3) having a respective inside surface (10a, 10b) and a respective outside surface (11 a, 11 b), and
- a frame (4) comprising a plurality of slats (5), integrally connected with each bellows (2, 3) to support and stiffen each bellows (2, 3) during opening and closing,
the first and second accordion-like bellows (2, 3) being movable between said closed and open configuration respectively in a first plane (P1) and in a second plane (P2), and in that it comprises at least one joining member (9) operatively coupled to the pair of first and second bellows (2, 3), which uninterruptedly and uniformly connects the inside surfaces (10a, 10b) and outside surfaces (11 a, 11 b) of the first and a second bellows (2, 3) of said pair at a corner zone (ZA) wherein said first plane (P1) and second plane (P2) meet, **characterised in that** the joining member (9) comprises a plurality of bands (14) which are connected to each other, and wherein each band (14) comprises a first portion (17) and a second portion (18), which are connected to the first bellows (2) and to the second bellows (3), respectively; each bellows (2, 3) defining a plurality of longitudinal strips (8a, 8b) of a certain width; the widths (d1, d2) of the first portion (17) and of the second portion (18) being substantially equal to the width of the strips (8a, 8b) of the respective bellows (2, 3) which they are connected to.

2. The device according to claim 1, **characterized in that** the bands (14) each have an outer profile (16) and the joining member (9) comprises a plurality of bands (14) which are connected to each other in pairs at the respective outer profiles (16).

3. The device according to claim 2, **characterized in that** the pairs of connected bands (14) form a base element (20) of the joining member (9); the base element (20) being connected at respective ends (22a, 22b) to each first and a second bellows (2, 3) of the pair of bellows (2, 3).

4. The device according to claim 3, **characterized in that** each end (22a, 22b) of the base element (20) is connected by overlapping the respective first and second bellows (2, 3) of the pair of bellows (2, 3).

5. The device according to claim 4, **characterized in that** the overlap between the ends (22a, 22b) of the base element (20) and the respective bellows (2, 3) is a stretch (ZS) substantially equal to 20 mm in length.

6. The device according to any of the claims from 1 to 5, **characterized in that** each of the bands (14) is integrally connected to respective slats (5) of the frame (4).

7. The device according to claim 1, **characterized in that** each band (14) comprises a third portion (19) which connects the first portion (17) to the second portion (18) and whose width (d3) is greater than the width (d1, d2) of the first portion (17) and of the second portion (18).

8. The device according to any of the claims from 3 to 7, **characterized in that** each base element (20) is integrally connected to respective slats (5) of the frame (4) separately from the other base elements (20).

9. The device according to claim 8, **characterized in that** each band (14) is connected to a respective slat (5) at its third portion (19) and/or at its first portion (17) and at its second portion (18).

10. The device according to any of the claims from 1 to 9, **characterized in that** each slat (5) has an inner profile (26) and each band (14) has an inner profile (15) which mates with the inner profile (26) of the slat (5) it is connected to.

## Patentansprüche

1. Faltenbalgabdeckungsvorrichtung für Werkzeugmaschinen, umfassend:
- ein Paar eines ersten und eines zweiten ziehharmonikaähnlichen Faltenbalgs (2, 3), bewegbar zwischen einer geschlossenen Konfiguration und einer offenen Konfiguration und umgekehrt, wobei sowohl der erste als auch der zweite ziehharmonikaähnliche Faltenbalg (2, 3) eine
jeweilige innenseitige Oberfläche (10a, 10b) und eine jeweilige außenseitige Oberfläche (11a, 11b) aufweisen, und
- einen Rahmen (4), umfassend eine Vielzahl an Lamellen (5), die fest mit einem jeden Faltenbalg (2, 3) verbunden sind, um einen jeden Faltenbalg (2, 3) während des Öffnens und Schließens zu stützen und zu versteifen,
wobei der erste und der zweite ziehharmonikaähnliche Faltenbalg (2, 3) jeweils zwischen der geschlossenen und offenen Konfiguration in einer ersten Ebene (P1) und in einer zweiten Ebene (P2) bewegbar sind, wobei sie mindestens ein Zusammenfügungselement (9) umfasst,
das betriebswirksam mit dem Paar des ersten und zweiten Faltenbalgs (2, 3) gekuppelt ist, das ununterbrochen und gleichförmig die innenseitigen Oberflächen (10a, 10b) und die außenseitigen Oberflächen (11a, 11b) des ersten und eines zweiten Faltenbalgs (2, 3) des Paars an einer Eckzone (ZA) verbinden, wobei die erste Ebene (P1) und die zweite Ebene (P2) aufeinandertreffen, **dadurch gekennzeichnet, dass**
das Zusammenfügungselement (9) eine Vielzahl an Bändern (14) umfasst, die miteinander verbunden sind, wobei ein jedes Band (14) einen ersten Abschnitt (17) und einen zweiten Abschnitt (18) umfasst, die jeweils mit dem ersten Faltenbalg (2) und dem zweiten Faltenbalg (3) verbunden sind, wobei ein jeder Faltenbalg (2, 3) eine Vielzahl an Längsstreifen (8a, 8b) einer bestimmten Breite definiert, wobei die Breiten (dl, d2) des ersten Abschnitts (17) und des zweiten Abschnitts (18) im Wesentlichen gleich der Breite der Streifen (8a, 8b) des jeweiligen Faltenbalgs (2, 3), mit dem sie verbunden sind, sind.

2. Vorrichtung nach Anspruch 1, **dadurch gekennzeichnet, dass** die Bänder (14) je ein außenseitiges Profil (16) aufweisen und das Zusammenfügungselement (9) eine Vielzahl an Bändern (14) aufweist, die in Paaren an den jeweiligen außenseitigen Profilen (16) miteinander verbunden sind.

3. Vorrichtung nach Anspruch 2, **dadurch gekennzeichnet, dass** die Paare verbundener Bänder (14) ein Basiselement (20) des Zusammenfügungselements (9) bilden, wobei das Basiselement (20) an jeweiligen Enden (22a, 22b) jeweils mit dem ersten und dem zweiten Faltenbalg (2, 3) des Paars der Faltenbalge (2, 3) verbunden sind.

4. Vorrichtung nach Anspruch 3, **dadurch gekennzeichnet, dass** ein jedes Ende (22a, 22b) des Basiselements (20) durch Überlappen des jeweiligen ersten und zweiten Faltenbalgs (2, 3) des Paars der Faltenbalge (2, 3) verbunden ist.

5. Vorrichtung nach Anspruch 4, **dadurch gekennzeichnet, dass** die Überlappung zwischen den Enden (22a, 22b) des Basiselements (20) und des jeweiligen Faltenbalgs (2, 3) ein Teilstück (ZS) ist, das im Wesentlichen gleich einer Länge von 20 mm ist.

6. Vorrichtung nach einem der vorhergehenden Ansprüche 1 bis 5, **dadurch gekennzeichnet, dass** ein jedes der Bänder (14) fest mit den jeweiligen Lamellen (5) des Rahmens (4) verbunden ist.

7. Vorrichtung nach Anspruch 1, **dadurch gekennzeichnet, dass** ein jedes Band (14) einen dritten Abschnitt (19) umfasst, der den ersten Abschnitt (17) mit dem zweiten Abschnitt (18) verbindet und dessen Breite (d3) größer ist als die Breite (dl, d2) des ersten Abschnitts (17) und des zweiten Abschnitts (18).

8. Vorrichtung nach einem der vorhergehenden Ansprüche 3 bis 7, **dadurch gekennzeichnet, dass** ein jedes Basiselement (20) fest mit den jeweiligen Lamellen (5) des Rahmens (4) separat von den anderen Basiselementen (20) verbunden ist.

9. Vorrichtung nach Anspruch 8, **dadurch gekennzeichnet, dass** ein jedes Band (14) mit einer jeweiligen Lamelle (5) an seinem dritten Abschnitt (19) und/oder an seinem ersten Abschnitt (17) und seinem zweiten Abschnitt (18) verbunden ist.

10. Vorrichtung nach einem der vorhergehenden Ansprüche 1 bis 9, **dadurch gekennzeichnet, dass** eine jede Lamelle (5) ein inneres Profil (26) aufweist und ein jedes Band (14) ein inneres Profil (15) aufweist, das zum inneren Profil (26) der Lamelle (5), mit dem es verbunden ist, passt.

## Revendications

1. Dispositif de recouvrement de soufflets pour machines-outils comprenant :
- une paire de premiers et de seconds soufflets en forme d'accordéon (2, 3) mobiles entre une configuration de fermeture et une configuration d'ouverture et vice versa, et chacun desdits premiers et seconds soufflets en forme d'accordéon (2, 3) comportant une
surface intérieure respective (10a, 10b) et une surface extérieure respective (11a, 11b), et
- un châssis (4) comprenant une pluralité de lattes (5), reliées de façon solidaire à chaque soufflet (2, 3) pour supporter et renforcer chaque soufflet (2, 3) lors de l'ouverture et de la fermeture,
les premiers et les seconds soufflets en forme d'accordéon (2, 3) étant mobiles entre lesdites configuration de fermeture et d'ouverture, respectivement, dans un premier plan (P1) et dans un second plan (P2), et en ce qu'il comprend au moins un organe de jonction (9), accouplé fonctionnellement à la paire de premiers et de seconds soufflets (2, 3), reliant de manière ininterrompue et uniforme les surfaces intérieures (10a, 10b) et les surfaces extérieures (11a 11b) des premiers et seconds soufflets (2, 3) de ladite paire au niveau d'une zone d'angle (ZA) dans lequel lesdits premier plan (P1) et second plan (P2) se rencontrent, **caractérisé en ce que** l'organe de jonction (9) comprend une pluralité de bandes (14) étant reliées les unes aux autres, et dans lequel chaque bande (14) comprend une première partie (17) et une seconde partie (18) étant reliées, respectivement, aux premiers soufflets (2) et aux seconds soufflets (3) ; chaque soufflet (2, 3) définissant une pluralité de bandelettes longitudinales (8a, 8b) d'une certaine largeur ; les largeurs (dl, d2) de la première partie (17) et de la seconde partie (18) étant substantiellement égales à la largeur des bandelettes (8a, 8b) des soufflets respectifs (2, 3) auxquelles elles sont reliées.

2. Dispositif selon la revendication 1, **caractérisé en ce que** chacune des bandes (14) comportent un profil extérieur (16) et l'organe de jonction (9) comprend une pluralité de bandes (14) étant reliées les unes aux autres par paires au niveau des profils extérieurs (16) respectifs.

3. Dispositif selon la revendication 2, **caractérisé en ce que** les paires de bandes reliées (14) forment un élément de base (20) de l'organe de jonction (9) ; l'élément de base (20) étant relié à des extrémités respectives (22a, 22b) à chacun des premiers et seconds soufflets (2, 3) de la paire de soufflets (2, 3).

4. Dispositif selon la revendication 3, **caractérisé en ce que** chaque extrémité (22a, 22b) de l'élément de base (20) est reliée en se superposant sur les premiers et seconds soufflets (2, 3) de la paire de soufflets (2, 3).

5. Dispositif selon la revendication 4, **caractérisé en ce que** la superposition entre les extrémités (22a, 22b) de l'élément de base (20) et les soufflets (2, 3) respectifs est une portion (ZS) substantiellement égale à 20 mm de largeur.

6. Dispositif selon l'une quelconque des revendications de 1 à 5, **caractérisé en ce que** chaque bande (14) est reliée de façon solidaire aux lattes (5) respectives du châssis (4).

7. Dispositif selon la revendication 1, **caractérisé en ce que** chaque bande (14) comprend une troisième partie (19) reliant la première partie (17) à la seconde partie (18) et dont la largeur (d3) est supérieure à la largeur (d1, d2) de la première partie (17) et de la seconde partie (18).

8. Dispositif selon l'une quelconque des revendications de 3 à 7, **caractérisé en ce que** chaque élément de base (20) est reliée de façon solidaire aux lattes (5) respectives du châssis (4) séparément des autres éléments de base (20).

9. Dispositif selon la revendication 8, **caractérisé en ce que** chaque bande (14) est reliée à une latte (5) respective au niveau de sa troisième partie (19) et/ou au niveau de sa première partie (17) et au niveau de sa seconde partie (18).

10. Dispositif selon l'une quelconque des revendications de 1 à 9, **caractérisé en ce que** chaque latte (5) comporte un profil intérieur (26) et chaque bande (14) possède un profil intérieur (15) qui correspond au profil intérieur (26) de la latte (5) auquel il est relié.
